(19) Europäisches Patentamt / European Patent Office / Office européen des brevets

(11) **EP 4 726 740 A1**

(12) **EUROPEAN PATENT APPLICATION**
published in accordance with Art. 153(4) EPC

(43) Date of publication:
**15.04.2026 Bulletin 2026/16**

(21) Application number: **24823220.9**

(22) Date of filing: **28.05.2024**

(51) International Patent Classification (IPC):
**H01B 1/06** (2006.01)          **H01M 4/36** (2006.01)
**H01M 10/052** (2010.01)          **H01M 10/0562** (2010.01)

(52) Cooperative Patent Classification (CPC):
**H01B 1/06; H01M 4/36; H01M 10/052;
H01M 10/0562;** Y02E 60/10

(86) International application number:
**PCT/JP2024/019515**

(87) International publication number:
**WO 2024/257600 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2023 JP 2023096558**

(71) Applicant: **Panasonic Intellectual Property
Management Co., Ltd.
Kadoma-shi, Osaka 571-0057 (JP)**

(72) Inventors:
• **NISHIO, Yusuke**
  **Kadoma-shi, Osaka 571-0057 (JP)**
• **MIYATAKE, Kazufumi**
  **Kadoma-shi, Osaka 571-0057 (JP)**
• **SAKAIDA, Masashi**
  **Kadoma-shi, Osaka 571-0057 (JP)**

(74) Representative: **Grünecker Patent- und
Rechtsanwälte
PartG mbB
Leopoldstraße 4
80802 München (DE)**

(54) **SOLID ELECTROLYTE MATERIAL, METHOD FOR PRODUCING SOLID ELECTROLYTE MATERIAL, POSITIVE ELECTRODE MATERIAL, AND BATTERY**

(57)     A solid electrolyte material includes Li, Al, and X. X represents anions including F, and the solid electrolyte material has a specific surface area of greater than or equal to 16 $m^2/g$. A method for producing the solid electrolyte material includes a wet pulverization step of pulverizing a mixture containing a solvent and a raw material composition containing compositional components of the solid electrolyte material. The positive electrode material contains a positive electrode active material coated with the solid electrolyte material.

FIG. 1

EP 4 726 740 A1

**Description**

Technical Field

The present disclosure relates to a solid electrolyte material, a method for producing the solid electrolyte material, a positive electrode material, and a battery.

Background Art

PTL 1 discloses an all-solid-state battery that uses a sulfide solid electrolyte material.
PTL 2 discloses lithium nickel oxide whose surface is coated with lithium fluoride.

Citation List

Patent Literature

PTL 1: Japanese Unexamined Patent Application Publication No. 2011-129312
PTL 2: Japanese Unexamined Patent Application Publication No. 2012-84547 Summary of Invention

It is an object of the present disclosure to provide a solid electrolyte material that is suitable for lithium ion conduction and has improved contact with other materials.
The present disclosure provides a solid electrolyte material including:

Li; Al; and X,
wherein X represents anions including F, and
wherein the solid electrolyte material has a specific surface area of greater than or equal to 16 $m^2$/g.

The present disclosure provides a solid electrolyte material that is suitable for lithium ion conduction and has improved contact with other materials.

Brief Description of Drawings

[Fig. 1] Fig. 1 shows a cross-sectional view of a battery 1000 according to a second embodiment.
[Fig. 2] Fig. 2 shows a schematic illustration of a compression molding die 300 used to evaluate the ionic conductivity of a solid electrolyte material.
[Fig. 3] Fig. 3 is a graph showing a Cole-Cole plot obtained by measuring the impedance of a solid electrolyte material in Example 1.
[Fig. 4] Fig. 4 is a graph showing the initial discharge characteristics of a battery in Example 1.

Description of Embodiments

Embodiments of the present disclosure will next be described with reference to the drawings.

(First embodiment)

A solid electrolyte material according to a first embodiment contains Li, Al, and X. X represents anions including F. The solid electrolyte material according to the first embodiment has a specific surface area of greater than 16 $m^2$/g. In the present disclosure, the specific surface area of the solid electrolyte material is a specific surface area determined by the BET (Brunauer-Emmett-Teller) method.
The phrase "contains Li, Al, and X" means that no elements other than Li, Al, and X are intentionally used as raw materials of the solid electrolyte material. The solid electrolyte material is allowed to contain unavoidable impurities. Examples of the elements contained as unavoidable impurities include hydrogen, oxygen, and nitrogen. These elements are present in raw powder material of the solid electrolyte material or in an atmosphere during production or storage of the solid electrolyte material. Impurities may also be mixed into the solid electrolyte material from a container used for the synthesis of the solid electrolyte material.

The solid electrolyte material according to the first embodiment is suitable for lithium ion conduction and has improved contact with other materials. Therefore, with the solid electrolyte material according to the first embodiment, the resistance at the interface with other materials can be reduced. Examples of the other materials include active materials.

Generally, polycrystalline materials are used as active materials for lithium ion secondary batteries. The surfaces of the active materials are not flat and often have irregularities such as small grooves or recesses. When the surface of an active material is coated with a solid electrolyte, it is desirable to improve the contact between the active material and the solid electrolyte in order to reduce the resistance of the battery. To achieve this, the solid electrolyte must deform, for example, under compression so as to conform to the irregular shape of the active material. When the surface of the solid electrolyte is flat and the particle size of the solid electrolyte is large, the pressure during pressing is concentrated on the protruding portions of the active material. In this case, good contact between the active material and the solid electrolyte cannot be achieved in the recessed portions. However, when the particle size of the solid electrolyte is smaller than the recessed portions on the surface of the active material, the pressure is applied while the solid electrolyte is present in the recessed portions, so that good contact is achieved between the active material and the solid electrolyte. Moreover, when the surface of the solid electrolyte has irregularities, it is easier for the solid electrolyte to enter the recessed portions on the surface of the active material than when the surface of the solid electrolyte is flat, so that good contact can be easily achieved between the active material and the solid electrolyte. A small particle size combined with surface irregularities results in a large specific surface area. Specifically, with a solid electrolyte with a large specific surface area, good contact with the active material can be easily achieved. Therefore, the resistance of the battery can be reduced, and the charge-discharge characteristics of the battery, for example, can be improved.

The solid electrolyte material according to the first embodiment may be used, for example, to obtain a battery with good charge-discharge characteristics. An example of the battery is a solid-state battery. The solid electrolyte material according to the first embodiment is suitable as a material for solid-state batteries. The solid-state battery may be a primary battery or a secondary battery. The solid-state battery may be an all-solid-state battery.

Preferably, the solid electrolyte material according to the first embodiment contains no sulfur. A solid electrolyte material containing no sulfur is highly safe because it does not generate hydrogen sulfide even when exposed to air. The sulfide solid electrolyte disclosed in PTL 1 can generate hydrogen sulfide when exposed to air.

The solid electrolyte material according to the first embodiment contains F and can therefore has high oxidation resistance. This is because F has a high oxidation-reduction potential. However, since the electronegativity of F is high, the bonding between F and Li is relatively strong. Therefore, the lithium ion conductivity of a solid electrolyte material containing Li and F is generally low. For example, the electric conductivity of the LiF disclosed in PTL 2 is so high that it cannot be measured by the AC impedance method. However, since the solid electrolyte material according to the first embodiment contains Al in addition to Li and F, the solid electrolyte material can have an ionic conductivity of, for example, greater than or equal to $1.2 \times 10^{-10}$ S/cm. This conductivity value is sufficient for lithium ions to migrate a short distance. For example, when the surface of an active material is coated with the solid electrolyte material according to the first embodiment, lithium ions can pass through the solid electrolyte material layer.

The specific surface area of the solid electrolyte material according to the first embodiment may be less than 100 $m^2/g$, may be less than 60 $m^2/g$, and may be less than or equal to 44.6 $m^2/g$. In this case, the above-described effects can be obtained sufficiently.

The specific surface area of the solid electrolyte material according to the first embodiment may be greater than or equal to 32.4 $m^2/g$. In this case, the above-described effects can be obtained sufficiently.

To increase the ionic conductivity of the solid electrolyte material according to the first embodiment, the solid electrolyte material may further contain one or more types of anions other than F. Examples of these anions include those of Cl, Br, I, O, and Se.

To improve the oxidation resistance of the solid electrolyte material according to the first embodiment, the ratio of the molar amount of F to the total molar amount of anions included in the solid electrolyte material may be greater than or equal to 0.50 and less than or equal to 1.0.

To improve the oxidation resistance of the solid electrolyte material according to the first embodiment, F may be the only anions included in the solid electrolyte material. Specifically, the above molar amount ratio may be 1.0.

The solid electrolyte material according to the first embodiment may contain a phase represented by compositional formula (1):

$$Li_{6-3a}Al_aF_6 \qquad (1)$$

where $0 < a \leq 1.5$ is satisfied.

A solid electrolyte material including the phase represented by this chemical composition has high ionic conductivity.

To increase the ionic conductivity of the solid electrolyte material, $0.7 \leq a \leq 1.3$ may be satisfied in formula (1), and $0.9 \leq a \leq 1.04$ may be satisfied.

The upper and lower limits of the range of "a" in formula (1) can be specified by any combination of the following numerical values: 0.7, 0.8, 0.9, 0.96, 1, 1.04, 1.1, 1.2, and 1.3.

The solid electrolyte material according to the first embodiment may contain $Li_3AlF_6$ or may be $Li_3AlF_6$. $Li_3AlF_6$ has high oxidation resistance.

The solid electrolyte material according to the first embodiment may be crystalline or may be amorphous.

The solid electrolyte material according to the first embodiment may include the phase represented by formula (1).

No limitation is imposed on the shape of the solid electrolyte material according to the first embodiment. For example, the shape is a needle-like shape, a spherical shape, or an elliptical shape. The solid electrolyte material according to the first embodiment may be in the form of particles. The solid electrolyte material according to the first embodiment may have a pellet shape or a plate shape.

<Method for producing solid electrolyte material>

The solid electrolyte material according to the first embodiment is produced, for example, by the following method.

A plurality of halide raw powder materials weighed such that the intended chemical composition is obtained are mixed with an organic solvent in a mixer so as to be finely pulverized.

When the intended chemical composition is, for example, $Li_3AlF_6$, LiF and $AlF_3$ are prepared such that their molar ratio is about 3:1. The raw powder materials may be prepared such that their molar ratio is adjusted in advance to compensate for a compositional change that can occur during the synthesis process. The raw powder materials and the organic solvent are charged into a mixer such as a planetary ball mill and mixed so as to be finely pulverized. Specifically, treatment using the wet ball mill is performed. The raw powder materials may be mixed prior to charging into the mixer.

The balls are separated after the mixing, and a slurry with the particles dispersed therein is thereby obtained. The slurry is dried at a temperature determined by the boiling point of the organic solvent used, and solids are thereby obtained. The solids are pulverized in a mortar to thereby obtain a reaction product.

By performing wet pulverization, the size of the particles of the product can be reduced. Specifically, the specific surface area of the solid electrolyte material can be increased.

It is expected that, by dissolving in an organic solvent the solids obtained by drying the slurry and recrystallizing them, their particle size can be further reduced. Alternatively, the raw powder materials of the solid electrolyte material may be dissolved in an organic solvent and recrystallized to reduce their particle sizes, and the resulting powders may be subjected to treatment in a wet ball mill.

The solids obtained by drying the slurry may be heat-treated in a vacuum or an inert atmosphere. The heat treatment is performed at higher than or equal to 100°C and lower than or equal to 300°C for longer than and equal to 1 hour. To prevent the change in the chemical composition during the heat treatment, the heat treatment may be performed in a sealed container such as a quartz tube.

As described above, by performing wet pulverization in which the mixture containing the solvent and the raw material composition containing the components forming the solid electrolyte material is pulverized, the solid electrolyte material according to the first embodiment can be obtained. The raw material composition containing the components forming the solid electrolyte material includes a plurality of halide raw powder materials. The solvent is typically an organic solvent.

To increase the specific surface area of the solid electrolyte material, the particle size of the balls used in the wet ball mill may be reduced. Alternatively, the amount of balls used in the wet ball mill may be increased. Alternatively, the treatment time in the wet ball mill may be extended.

The solvent used in the wet ball mill may include at least one selected from the group consisting of $\gamma$-butyrolactone, propylene carbonate, butyl acetate, ethanol, dimethyl sulfoxide, and tetralin. By using any of these solvents, the solid electrolyte material according to the first embodiment can be produced. From the viewpoint of the dielectric constant of the solvent, the solvent used may be N-methyl-2-pyrrolidone (NMP).

(Second embodiment)

A second embodiment will next be described. Features already described in the first embodiment will be omitted appropriately.

A battery according to the second embodiment includes a positive electrode, an electrolyte layer, and a negative electrode. The electrolyte layer is disposed between the positive electrode and the negative electrode.

At least one selected from the group consisting of the positive electrode, the electrolyte layer, and the negative electrode contains the solid electrolyte material according to the first embodiment.

The battery according to the second embodiment contains the solid electrolyte material according to the first embodiment and therefore has good charge-discharge characteristics.

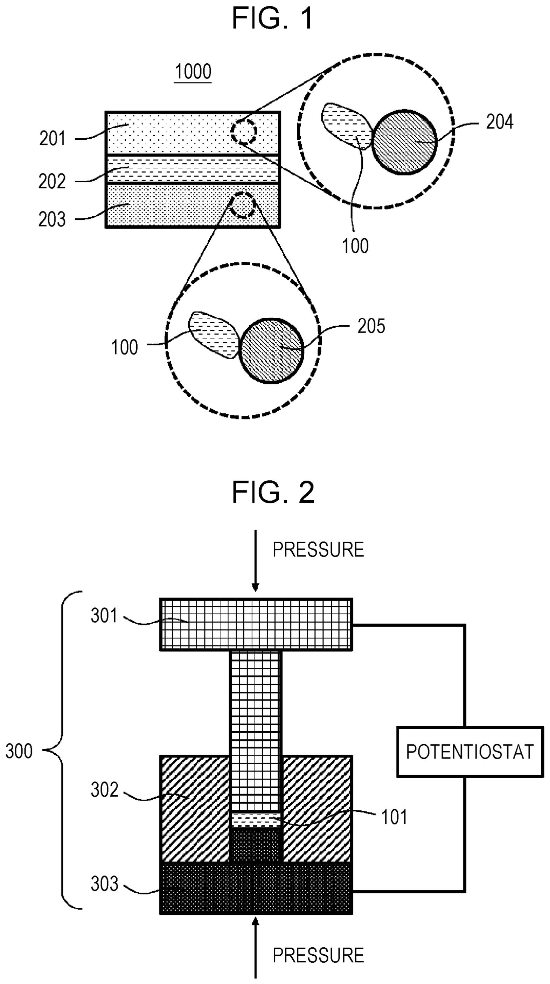

Fig. 1 shows a cross-sectional view of the battery 1000 according to the second embodiment.

The battery 1000 according to the second embodiment includes the positive electrode 201, the electrolyte layer 202, and the negative electrode 203. The electrolyte layer 202 is disposed between the positive electrode 201 and the negative electrode 203.

The positive electrode 201 contains a positive electrode active material 204 and a solid electrolyte 100.

The electrolyte layer 202 contains an electrolyte material.

The negative electrode 203 contains a negative electrode active material 205 and the solid electrolyte 100.

The solid electrolyte 100 includes, for example, the solid electrolyte material according to the first embodiment. The solid electrolyte 100 may be particles containing the solid electrolyte material according to the first embodiment as a main component. The particles containing the solid electrolyte material according to the first embodiment as the main component are particles containing the solid electrolyte material according to the first embodiment as a component with the highest molar ratio. The solid electrolyte 100 may be particles composed of the solid electrolyte material according to the first embodiment.

The positive electrode 201 contains a material capable of occluding and releasing metal ions (e.g., lithium ions). This material is, for example, the positive electrode active material 204.

Examples of the positive electrode active material 204 include lithium-containing metal oxides such as lithium-containing transition metal oxides, lithium-containing transition metal phosphates, transition metal fluorides, polyanions, fluorinated polyanion materials, transition metal sulfides, transition metal oxyfluorides, transition metal oxysulfides, and transition metal oxynitrides. The transition metals are defined according to the definition described in IUPAC "Gold Book" and "Red Book" and do not include $d^{10}$ elements (Zn, Cd, and Hg of Group 12), lanthanoids (excluding La ($5d^1 6s^2$)), and actinoids (excluding Ac ($6d^1 7S^2$)). Examples of the lithium-containing transition metal oxides include $Li(Ni,Co,Mn)O_2$, $Li(Ni,Co,Al)O_2$, and $LiCoO_2$.

In the present disclosure, "(A,B,C)" means "at least one selected from the group consisting of A, B, and C."

No particular limitation is imposed on the shape of the positive electrode active material 204. The positive electrode active material 204 may be in the form of particles. The positive electrode active material 204 may have a median diameter of greater than or equal to 0.1 $\mu$m and less than or equal to 100 $\mu$m. When the positive electrode active material 204 has a median diameter of greater than or equal to 0.1 $\mu$m, the positive electrode active material 204 and the solid electrolyte 100 can be well dispersed in the positive electrode 201. In this case, the charge-discharge characteristics of the battery 1000 are improved. When the positive electrode active material 204 has a median diameter of less than or equal to 100 $\mu$m, the diffusion velocity of lithium in the positive electrode active material 204 increases. This allows the battery 1000 to operate at high output power.

The positive electrode active material 204 may have a median diameter greater than that of the solid electrolyte 100. In this case, the positive electrode active material 204 and the solid electrolyte 100 can be well dispersed in the positive electrode 201.

To increase the energy density and output power of the battery 1000, the ratio of the volume of the positive electrode active material 204 to the total volume of the positive electrode active material 204 and the solid electrolyte 100 in the positive electrode 201 may be greater than or equal to 0.30 and less than or equal to 0.95.

At least part of the surface of the positive electrode active material 204 may be coated with a coating layer. The coating layer may be formed on the surface of the positive electrode active material 204, for example, before the positive electrode active material 204 is mixed with a conductive assistant and a binder. Examples of the coating material contained in the coating layer include sulfide solid electrolytes, oxide solid electrolytes, and halide solid electrolytes. When the solid electrolyte 100 contains a sulfide solid electrolyte, the coating material may contain the solid electrolyte material according to the first embodiment in order to prevent the oxidative decomposition of the sulfide solid electrolyte. When the solid electrolyte 100 contains the solid electrolyte material according to the first embodiment, the coating material may contain an oxide solid electrolyte in order to prevent the oxidative decomposition of the solid electrolyte material. Lithium niobate, which is highly stable at high potential, may be used as the oxide solid electrolyte. By preventing the oxidative decomposition, an increase in the overvoltage of the battery 1000 can be prevented.

The sulfide solid electrolyte is a solid electrolyte containing Li and S. When the solid electrolyte 100 contains the sulfide solid electrolyte, the sulfide solid electrolyte used may be a material such as $Li_2S$-$P_2S_5$ described later. When the positive electrode active material 204 is coated with the solid electrolyte material according to the first embodiment, the oxidative decomposition of the solid electrolyte 100 containing Li and S can be prevented.

To increase the energy density and output power of the battery 1000, the positive electrode 201 may have a thickness of greater than or equal to 10 $\mu$m and less than or equal to 500 $\mu$m.

The electrolyte layer 202 contains the electrolyte material. The electrolyte material is, for example, a solid electrolyte material. The solid electrolyte material may include the solid electrolyte material according to the first embodiment. The electrolyte layer 202 may be a solid electrolyte layer.

The electrolyte layer 202 may contain the solid electrolyte material according to the first embodiment in an amount of greater than or equal to 50% by mass. The electrolyte layer 202 may contain the solid electrolyte material according to the first embodiment in an amount of greater than or equal to 70% by mass. The electrolyte layer 202 may contain the solid electrolyte material according to the first embodiment in an amount of greater than or equal to 90% by mass. The electrolyte layer 202 may be composed only of the solid electrolyte material according to the first embodiment.

The solid electrolyte material according to the first embodiment is hereinafter referred to as a first solid electrolyte material. A solid electrolyte material different from the first solid electrolyte material is referred to as a second solid electrolyte material.

The electrolyte layer 202 may contain not only the first solid electrolyte material but also the second solid electrolyte material. In the electrolyte layer 202, the first solid electrolyte material and the second solid electrolyte material may be dispersed uniformly. A layer formed of the first solid electrolyte material and a layer formed of the second solid electrolyte material may be stacked in the stacking direction of the battery 1000.

The battery according to the second embodiment may include the positive electrode 201, a second electrolyte layer, a first electrolyte layer, and the negative electrode 203 in this order. The reduction potential of the solid electrolyte material contained in the first electrolyte layer may be less than the reduction potential of the solid electrolyte material contained in the second electrolyte layer. This allows the solid electrolyte material contained in the second electrolyte layer to be used without undergoing reduction. Therefore, the charge-discharge efficiency of the battery 1000 can be improved. For example, when the second electrolyte layer contains the first solid electrolyte material, the first electrolyte layer may contain a sulfide solid electrolyte in order to prevent the reductive decomposition of the first solid electrolyte material. In this case, the charge-discharge efficiency of the battery 1000 can be improved. The second electrolyte layer may contain the first solid electrolyte material. Since the first solid electrolyte material has high oxidation resistance, the battery obtained can have good charge-discharge characteristics.

The electrolyte layer 202 may be composed only of the second solid electrolyte material.

The electrolyte layer 202 may have a thickness of greater than or equal to 1 $\mu$m and less than or equal to 1000 $\mu$m. When the thickness of the electrolyte layer 202 is greater than or equal to 1 $\mu$m, the positive electrode 201 and the negative electrode 203 are unlikely to short-circuit. When the thickness of the electrolyte layer 202 is less than or equal to 1000 $\mu$m, the battery 1000 can operate at high output power.

Examples of the second solid electrolyte material include $Li_2MgX_4$, $Li_2FeX_4$, $Li(Al,Ga,In)X_4$, $Li_3(Al,Ga,In)X_6$, and LiI. Here, X is at least one selected from the group consisting of F, Cl, Br, and I.

To increase the energy density and output power of the battery 1000, the electrolyte layer 202 may have a thickness of greater than or equal to 1 $\mu$m and less than or equal to 1000 $\mu$m.

The negative electrode 203 contains a material capable of occluding and releasing metal ions (e.g., lithium ions). This material is, for example, the negative electrode active material 205.

Examples of the negative electrode active material 205 include metal materials, carbon materials, oxides, nitrides, tin compounds, and silicon compounds. The metal materials may be single metals or alloys. Examples of the metal material include metallic lithium and lithium alloys. Examples of the carbon material include natural graphite, coke, partially graphitized carbon, carbon fibers, spherical carbon, artificial graphite, and amorphous carbon. From the viewpoint of capacity density, suitable examples of the negative electrode active material include silicon (i.e., Si), tin (i.e., Sn), silicon compounds, and tin compounds.

The negative electrode active material 205 may be selected in consideration of the reduction resistance of the solid electrolyte material contained in the negative electrode 203. For example, when the negative electrode 203 contains the first solid electrolyte material, the negative electrode active material 205 may be a material capable of occluding and releasing lithium ions at higher than or equal to 0.27 V with respect to lithium. Examples of such a negative electrode active material include titanium oxides, metallic indium, and lithium alloys. Examples of the titanium oxide include $Li_4Ti_5O_{12}$, $LiTi_2O_4$, and $TiO_2$. By using any of the negative electrode active materials described above, the reductive decomposition of the first solid electrolyte material contained in the negative electrode 203 can be prevented. Therefore, the charge-discharge efficiency of the battery 1000 can be improved.

The shape of the negative electrode active material 205 is not limited to a specific shape. The negative electrode active material 205 may be in the form of particles. The negative electrode active material 205 may have a median diameter of greater than or equal to 0.1 $\mu$m and less than or equal to 100 $\mu$m. When the negative electrode active material 205 has a median diameter of greater than or equal to 0.1 $\mu$m, the negative electrode active material 205 and the solid electrolyte 100 can be well dispersed in the negative electrode 203. In this case, the charge-discharge characteristics of the battery 1000 are improved. When the negative electrode active material 205 has a median diameter of less than or equal to 100 $\mu$m, the lithium diffusion velocity in the negative electrode active material 205 increases. This allows the battery 1000 to operate at high output power.

The negative electrode active material 205 may have a median diameter lager than that of the solid electrolyte 100. In this case, the negative electrode active material 205 and the solid electrolyte 100 can be well dispersed in the negative electrode 203.

To increase the energy density and output power of the battery 1000, the ratio of the volume of the negative electrode active material 205 to the total volume of the negative electrode active material 205 and the solid electrolyte 100 in the negative electrode 203 may be greater than or equal to 0.30 and less than or equal to 0.95.

To increase the energy density and output power of the battery 1000, the negative electrode 203 may have a thickness of greater than or equal to 10 $\mu$m and less than or equal to 500 $\mu$m.

At least one selected from the group consisting of the positive electrode 201, the electrolyte layer 202, and the negative electrode 203 may contain the second solid electrolyte material for the purpose of increasing ionic conductivity, chemical stability, and electrochemical stability.

The second solid electrolyte material may be a sulfide solid electrolyte.

Examples of the sulfide solid electrolyte include $Li_2S-P_2S_5$, $Li_2S-SiS_2$, $Li_2S-B_2S_3$, $Li_2S-GeS_2$, $Li_{3.25}Ge_{0.25}P_{0.75}S_4$, and $Li_{10}GeP_2S_{12}$.

When the electrolyte layer 202 contains the first solid electrolyte material, the negative electrode 203 may contain the sulfide solid electrolyte in order to prevent the reductive decomposition of the first solid electrolyte material. When the negative electrode active material is coated with the electrochemically neutral sulfide solid electrolyte, the first solid electrolyte material can be prevented from coming into contact with the negative electrode active material. Therefore, the internal resistance of the battery 1000 can be reduced.

The second solid electrolyte material may be an oxide solid electrolyte.

Examples of the oxide solid electrolyte include:

(i) NASICON solid electrolytes such as $LiTi_2(PO_4)_3$ and element-substituted products thereof;
(ii) perovskite solid electrolytes such as $(LaLi)TiO_3$;
(iii) LISICON solid electrolytes such as $Li_{14}ZnGe_4O_{16}$, $Li_4SiO_4$, and $LiGeO_4$ and element-substituted products thereof;
(iv) garnet solid electrolytes such as $Li_7La_3Zr_2O_{12}$ and element-substituted products thereof; and
(v) $Li_3PO_4$ and N-substituted products thereof.

As described above, the second solid electrolyte material may be a halide solid electrolyte.

Examples of the halide solid electrolyte include $Li_2MgX_4$, $Li_2FeX_4$, $Li(Al,Ga,In)X_4$, $Li_3(Al,Ga,In)X_6$, and LiI. Here, X is at least one selected from the group consisting of F, Cl, Br, and I.

Other examples of the halide solid electrolyte include compounds represented by $Li_aMe_bY_cZ_6$. Here, $a + mb + 3c = 6$ and $c > 0$ are satisfied. Me is at least one selected from the group consisting of metal elements other than Li and Y and semimetal elements. Z is at least one selected from the group consisting of F, Cl, Br, and I. m represents the valence of Me. The "semimetal elements" are B, Si, Ge, As, Sb, and Te. The "metal elements" include all elements included in Groups 1 to 12 of the periodic table (except for hydrogen) and all elements included in Groups 13 to 16 of the periodic table (except for B, Si, Ge, As, Sb, Te, C, N, P, O, S, and Se).

To improve the ionic conductivity of the halide solid electrolyte, Me may be at least one selected from the group consisting of Mg, Ca, Sr, Ba, Zn, Sc, Al, Ga, Bi, Zr, Hf, Ti, Sn, Ta, and Nb.

The halide solid electrolyte may be $Li_3YC_{16}$ or $Li_3YBr_6$.

The second solid electrolyte material may be an organic polymer solid electrolyte.

Examples of the organic polymer solid electrolyte include compounds formed from a high molecular compound and a lithium salt.

The high molecular compound may have an ethylene oxide structure. The high molecular compound having an ethylene oxide structure can contain a large amount of a lithium salt, and this allows the ionic conductivity to be further increased.

Examples of the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used.

At least one selected from the group consisting of the positive electrode 201, the electrolyte layer 202, and the negative electrode 203 may contain a nonaqueous electrolyte solution, a gel electrolyte, or an ionic liquid in order to facilitate the transfer of lithium ions and improve the output characteristics of the battery.

The nonaqueous electrolyte solution contains a nonaqueous solvent and a lithium salt dissolved in the nonaqueous solvent.

Examples of the nonaqueous solvent include cyclic carbonate ester solvents, chain carbonate ester solvents, cyclic ether solvents, chain ether solvents, cyclic ester solvents, chain ester solvents, and fluorinated solvents. Examples of the cyclic carbonate ester solvent include ethylene carbonate, propylene carbonate, and butylene carbonate. Examples of the chain carbonic ester solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include $\gamma$-butyrolactone. Examples of the chain ester solvent include methyl acetate. Examples of the fluorinated solvent include fluoroethylene carbonate, fluoropropionic acid methyl ester, fluorobenzene, fluoroethyl methyl carbonate, and fluorodimethylene carbonate. One nonaqueous solvent selected from these solvents may be used alone. Alternatively, a combination of two or more nonaqueous solvents selected from these solvents may be used.

Examples of the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used. The concentration of the lithium salt is, for example, within the range of greater than or equal to 0.5 mol/L and less than or equal to 2 mol/L.

The gel electrolyte used may be a polymer material impregnated with a nonaqueous electrolyte solution. Examples of the polymer material include polyethylene oxide, polyacrylonitrile, polyvinylidene fluoride, polymethyl methacrylate, and polymers having an ethylene oxide bond.

Examples of the cations included in the ionic liquid include:

(i) aliphatic chain quaternary salts such as tetraalkylammoniums and tetraalkylphosphoniums;
(ii) aliphatic cyclic ammoniums such as pyrrolidiniums, morpholiniums, imidazoliniums, tetrahydropyrimidiniums, piperaziniums, and piperidiniums; and
(iii) nitrogen-containing heterocyclic aromatic cations such as pyridiniums and imidazoliums.

Examples of the anions included in the ionic liquid include $PF_6^-$, $BF_4^-$, $SbF_6^-$, $AsF_6^-$, $SO_3CF_3^-$, $N(SO_2CF3)_2^-$, $N(SO_2C_2F_5)_2^-$, $N(SO_2CF_3)(SO_2C_4F_9)^-$, and $C(SO_2CF_3)_3^-$.

The ionic liquid may contain a lithium salt.

At least one selected from the group consisting of the positive electrode 201, the electrolyte layer 202, and the negative electrode 203 may contain a binder in order to improve the adhesion between particles.

Examples of the binder include polyvinylidene fluoride, polytetrafluoroethylene, polyethylene, polypropylene, aramid resins, polyamides, polyimides, polyamide-imides, polyacrylonitrile, polyacrylic acids, polymethyl acrylate, polyethyl acrylate, polyhexyl acrylate, polymethacrylic acid, polymethyl methacrylate, polyethyl methacrylate, polyhexyl methacrylate, polyvinyl acetate, polyvinyl pyrrolidone, polyethers, polyethersulfone, hexafluoropolypropylene, styrene butadiene rubber, and carboxymethyl cellulose. The binder used may be a copolymer. Such a binder is, for example, a copolymer of two or more materials selected from the group consisting of tetrafluoroethylene, hexafluoroethylene, hexafluoropropylene, perfluoroalkyl vinyl ethers, vinylidene fluoride, chlorotrifluoroethylene, ethylene, propylene, pentafluoropropylene, fluoromethyl vinyl ether, acrylic acid, and hexadiene. The binder used may be a mixture of two or more materials selected from these materials.

At least one selected from the positive electrode 201 and the negative electrode 203 may contain a conductive assistant in order to increase electron conductivity.

Examples of the conductive assistant include:

(i) graphite such as natural graphite and artificial graphite;
(ii) carbon black such as acetylene black and Ketjen black;
(iii) conductive fibers such as carbon fibers and metal fibers;
(iv) fluorinated carbon;
(v) metal powders such as aluminum powder;
(vi) conductive whiskers such as zinc oxide and potassium titanate;
(vii) conductive meal oxides such as titanium oxide; and
(viii) conductive high molecular compounds such as polyaniline, polypyrrole, and polythiophene.

To reduce the cost, any of the conductive assistants in (i) and (ii) may be used.

Examples of the shape of the battery according to the second embodiment include a coin shape, a cylindrical shape, a rectangular shape, a sheet shape, a button shape, a flattened shape, and a stacked shape.

The battery according to the second embodiment may be produced, for example, by preparing a material for forming the positive electrode, a material for forming the electrolyte layer, and a material for forming the negative electrode and producing a layered body including the positive electrode, the electrolyte layer, and the negative electrode disposed in this order using a known method.

(Supplementary notes)

The following techniques are disclosed based on the foregoing description.

(Technique 1)

A solid electrolyte material including:

Li; Al; and X,
wherein X represents anions including F, and
wherein the solid electrolyte material has a specific surface area of greater than or equal to 16 m$^2$/g.

The solid electrolyte material provided by the present disclosure is suitable for lithium ion conduction and has improved contact with other materials.

(Technique 2)

The solid electrolyte material according to technique 1, wherein the solid electrolyte material includes a phase represented by compositional formula (1):

$$Li_{6-3x}Al_xF_6 \qquad (1)$$

where, $0 < x \leq 1.5$ is satisfied.
The solid electrolyte material including the phase having the chemical composition described above has high ionic conductivity.

(Technique 3)

The solid electrolyte material according to technique 1 or 2, wherein a ratio of a molar amount of F to a total molar amount of the anions included in the solid electrolyte material is greater than or equal to 0.50 and less than or equal to 1.0. With this compositional structure, the oxidation resistance of the solid electrolyte material can be enhanced.

(Technique 4)

The solid electrolyte material according to any one of techniques 1 to 3, wherein the solid electrolyte material includes $Li_3AlF_6$. With this compositional structure, the oxidation resistance of the solid electrolyte material can be enhanced.

(Technique 5)

The solid electrolyte material according to any one of techniques 1 to 4, wherein the specific surface area is less than 100 m$^2$/g. With this structure, the above-described effects can be obtained sufficiently.

(Technique 6)

The solid electrolyte material according to any one of techniques 1 to 5, wherein the specific surface area is less than 60 m$^2$/g. With this structure, the above-described effects can be obtained sufficiently.

(Technique 7)

The solid electrolyte material according to any one of techniques 1 to 6, wherein the specific surface area is greater than or equal to 32.4 m$^2$/g. With this structure, the above-described effects can be obtained sufficiently.

(Technique 8)

A method for producing the solid electrolyte material according to any one of techniques 1 to 7, the method including a wet pulverization step of pulverizing a mixture containing a solvent and a raw material composition containing compositional components of the solid electrolyte material. With this production method, the solid electrolyte material according to the present disclosure can be obtained.

(Technique 9)

The method for producing the solid electrolyte material according to technique 8, wherein the solvent includes at least one selected from the group consisting of $\gamma$-butyrolactone, propylene carbonate, butyl acetate, ethanol, dimethyl sulfoxide, and tetralin. By using any of these solvent, the solid electrolyte material according to the present disclosure can be produced.

(Technique 10)

A positive electrode material containing: the solid electrolyte material according to any one of techniques 1 to 7; and a positive electrode active material coated with the solid electrolyte material. With this structure, the contact between the positive electrode active material and other materials such as a solid electrolyte can be prevented, and the decomposition of the other materials can be prevented.

(Technique 11)

A battery including: a positive electrode containing the positive electrode material according to technique 10; and an electrolyte layer. In the battery obtained in the present disclosure, an increase in the overvoltage of the battery can be prevented.

(Technique 12)

The battery according to technique 11, wherein the battery is a solid-state battery. The solid electrolyte material according to the present disclosure is suitable for a material for a solid-state battery.

(Technique 13)

The battery according to technique 11 or 12, wherein the electrolyte layer contains a solid electrolyte containing Li and S. With this technique of the present disclosure, the oxidative decomposition of the solid electrolyte containing Li and S can be prevented.

EXAMPLES

The present disclosure will be described in more detail with reference to Examples and Comparative Examples.

<EXAMPLE 1>

(Production of solid electrolyte material)

In an argon atmosphere with a dew point of lower than or equal to -60°C (this atmosphere is hereinafter referred to as a "dry argon atmosphere"), LiF and AlF$_3$ powders used as raw materials were prepared such that the molar ratio of LiF to AlF$_3$ was 3:1. These raw powder materials were charged into a 45-cc planetary ball mill pot together with 1 mm$\phi$ balls (25 g). Then $\gamma$-butyrolactone (GBL) used as an organic solvent was added dropwise to the pot such that a solid content ratio of 30% was achieved. The solid content ratio is computed by {(the mass of the raw materials charged) / (the mass of the raw materials charged + the mass of the solvent charged)} $\times$ 100. The planetary ball mill was used to perform milling treatment at 500 rpm for 12 hours. After the milling treatment, the balls were separated to thereby obtain a slurry. The obtained slurry was dried using a heating mantle at 270°C under a nitrogen flow for 1 hour. The solids obtained were pulverized in a mortar to thereby obtain a solid electrolyte material powder in Example 1. The solid electrolyte material in Example 1 had a composition represented by Li$_3$AlF$_6$.

(Evaluation of ionic conductivity)

Fig. 2 is a schematic illustration of a compression molding die 300 used to evaluate the ionic conductivity of the solid electrolyte material.

The compression molding die 300 included an upper punch 301, a die 302, and a lower punch 303. The die 302 was formed of insulating polycarbonate. The upper punch 301 and the lower punch 303 were formed of electron conductive stainless steel.

The compression molding die 300 shown in Fig. 2 was used to evaluate the ionic conductivity of the solid electrolyte material in Example 1 using the following method.

In a dry atmosphere with a dew point of lower than or equal to -30°C, the powder of the solid electrolyte material in Example 1 was filled into the compression molding die 300. The upper punch 301 and the lower punch 303 were used to apply a pressure of 400 MPa to the solid electrolyte material in Example 1 inside the pressure molding die 300.

With the applied pressure maintained, the upper punch 301 and the lower punch 303 were connected to a potentiostat (VSP300 manufactured by BioLogic) equipped with a frequency response analyzer. The upper punch 301 was connected to a working electrode and a potential measurement terminal. The lower punch 303 was connected to a counter electrode and a reference electrode. The impedance of the solid electrolyte material was measured at room temperature using an electrochemical impedance measurement method.

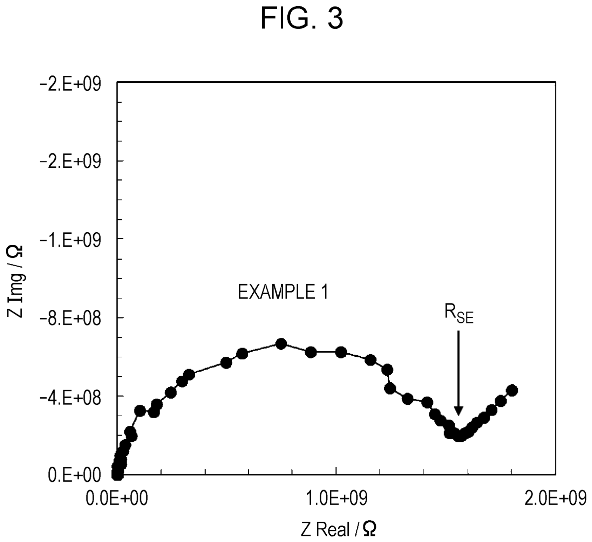

Fig. 3 is a graph showing a Cole-Cole plot obtained by the measurement of the impedance of the solid electrolyte material in Example 1.

In Fig. 3, the real value of the complex impedance at a measurement point at which the absolute value of the phase of the complex impedance was minimum was regarded as the ionic conduction resistance of the solid electrolyte material. See an arrow $R_{SE}$ shown in Fig. 3 for this real value. This resistance value was used to compute the ionic conductivity from the following formula (1).

$$\sigma = (R_{SE} \times S / t)^{-1} \quad (i)$$

Here, $\sigma$ represents the ionic conductivity. S represents the area of contact between the solid electrolyte material and the upper punch 301. Specifically, S is equal to the cross-sectional area of a hollow portion of the die 302 in Fig. 3. $R_{SE}$ represents the resistance value of the solid electrolyte material in the impedance measurement. t represents the thickness of the solid electrolyte material. Specifically, t is the thickness of a layer formed of the powder 101 of the solid electrolyte material in Fig. 3.

The ionic conductivity of the solid electrolyte material in Example 1 that was measured at 25°C was $1.4 \times 10^{-10}$ S/cm.

(Measurement of specific surface area)

To measure the specific surface area, a specific surface area/pore size distribution analyzer (BELSORP MINI X manufactured by MicrotracBEL) was used. The specific surface area obtained using this analyzer is referred to as the BET specific surface area.

A powder (about 1 g) of the solid electrolyte material in Example 1 was charged into a dedicated test tube in an air atmosphere with a dew point of lower than or equal to - 40°C.

Vacuum drying was performed as pre-treatment at 80°C for 1 hour.

The difference between the weight of the test tube containing the pre-treated sample and the weight of the test tube containing no sample was used to measure the mass of the charged sample.

The test tube subjected to the pre-treatment was used to measure the BET specific surface area. The specific surface area of the solid electrolyte material in Example 1 was found to be 16.0 $m^2$/g.

(Production of coated active material)

A powder of Li(Ni,Co,Al)$O_2$ (hereinafter referred to as NCA) was prepared as the positive electrode active material. A coating layer made of LAF was formed on the surface of the NCA. The coating layer was formed by compression shearing treatment using a particle-composing machine (NOB-MINI manufactured by Hosokawa Micron Group). Specifically, the NCA and LAF were weighed at a volume ratio of 98.9:1.1, and the mixture was treated under the conditions of a blade clearance of 2 mm, a rotation speed of 8000 rpm, and a treatment time of 30 minutes. A coated active material in Example 1 was thereby obtained.

(Production of sulfide solid electrolyte)

$Li_2S$ and $P_2S_5$ powders used as raw materials were weighed at a molar ratio of $Li_2S : P_2S_5$ = 75:25 in an argon glove box with a dew point of lower than or equal to -60°C. These powders were pulverized and mixed in a mortar to obtain a mixture. Then a planetary mixer (type P-7 manufactured by Fritsch) was used to subject the mixture to milling treatment under the condition of 510 rpm for 10 hours. A glass-like solid electrolyte was thereby obtained. The glass-like solid electrolyte was heat-treated in an inert atmosphere under the condition of 270°C for 2 hours. $Li_2S$-$P_2S_5$ (hereinafter referred to as "LPS"), a glass ceramic-like solid electrolyte, was thereby obtained.

(Production of battery)

The positive electrode active material in Example 1 and the LPS were weighed in a dry argon atmosphere such that the volume ratio of the coated active material to the sulfide solid electrolyte was 7:3. These materials were mixed in an agate mortar to thereby produce a positive electrode material mixture in Example 1.

The LPS (50 mg) and the positive electrode material mixture (10 mg) were stacked in this order within an insulating tube having an inner diameter of 9.5 mm. A pressure of 300 MPa was applied to the resulting stacked body to thereby form an electrolyte layer and a positive electrode. The thickness of the electrolyte layer was 400 $\mu$m.

Next, metallic Li (thickness: 200 $\mu$m) was stacked on the first electrolyte layer. A pressure of 80 MPa was applied to the resulting stacked body to thereby form a negative electrode.

Next, stainless steel-made current collectors were attached to the positive and negative electrodes, and current collector leads were attached to the current collectors.

Finally, an insulating ferrule was used to isolate the inside of the insulating tube from the outer atmosphere to seal the inside of the tube. A battery in Example 1 was thereby obtained.

(Charge-discharge test)

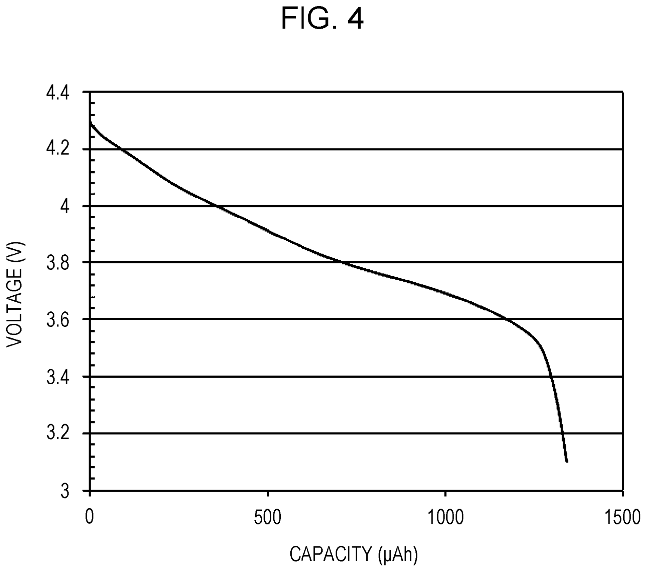

Fig. 4 is a graph showing the initial discharge characteristics of the battery in Example 1. The initial charge-discharge characteristics were measured by the following method.

The battery in Example 1 was placed in a thermostat oven at 25°C.

The battery in Example 1 was charged at a current density of 125 $\mu$A/cm$^2$ to a voltage of 4.3 V. This current density corresponds to a 0.1C rate.

Next, the battery in Example 1 was discharged at a current density of 125 $\mu$A/cm$^2$ until the voltage reached 3.1 V.

The results of the charge-discharge test showed that the initial discharge capacity of the battery in Example 1 was 1340 $\mu$Ah.

<EXAMPLES 2 to 4>

(Production of solid electrolyte materials)

In Examples 2 to 4, the same procedure as in Example 1 was used to prepare LiF and AlF$_3$ raw powder materials such that the molar ratio of LiF to AlF$_3$ was 3:1.

The solvent, the solid content ratio, the diameter of the balls, the amount of the balls, the treatment time, and the drying condition in the milling treatment are shown in Table 1.

Solid electrolyte materials in Examples 2 to 4 were obtained using the same procedure as in Example 1 except for the conditions shown in Table 1.

(Evaluation of ionic conductivity)

The ionic conductivity of each of the solid electrolyte materials in Examples 2 to 4 was measured in the same manner as in Example 1. The measurement results are shown in Table 1.

(Measurement of specific surface area)

Each of the solid electrolyte materials in Examples 2 to 4 was used to measure its BET specific surface area in the same manner as in Example 1. The measurement results are shown in Table 1.

(Charge-discharge test)

Batteries in Examples 2 to 4 were obtained using the solid electrolyte materials in Examples 2 to 4 in the same manner as in Example 1.

The charge-discharge test was performed using the batteries in Examples 2 to 4 in the same manner as in Example 1. The results showed that the batteries in Examples 2 to 4 could be well charged and discharged, as could the battery in Example 1.

<Reference Example 1>

LiF and AlF$_3$ powders used as raw materials were prepared in a dry argon atmosphere such that the molar ratio of

LiF to AlF$_3$ was 3:1. These raw powder materials were pulverized and mixed in a mortar. The obtained powder mixture was charged into a 45-cc planetary ball mill pot together with 5 mmϕ balls (25 g). The planetary ball mill was used to perform milling treatment at 500 rpm for 12 hours. A solid electrolyte material in Reference Example 1 was thereby obtained.

As described above, the solid electrolyte material in Reference Example 1 was produced using the dry ball mill without using any organic solvent.

The solid electrolyte material in Reference Example 1 was used to measure its ionic conductivity and specific surface area in the same manner as in Example 1.

The ionic conductivity measured at 25°C was $8.3 \times 10^{-8}$ S/cm.

The measured specific surface area was 3.1 m$^2$/g.

<Comparative Example 1>

LiF was used as the solid electrolyte material, and the ionic conductivity was measured in the same manner as in Example 1. However, the ionic conductivity could not be measured at 25°C.

[Table 1]

| | Chemical composition | Synthesis method | Solvent | Solid content ratio [%] | Ball diameter [mm] | Amount of balls [g] | Synthesis time [h] | Drying condition | BET [m²/g] | Conductivity [S/cm] |
|---|---|---|---|---|---|---|---|---|---|---|
| Example 1 | $Li_3AlF_6$ | Wet | GBL | 30 | 0.5 | 25 | 12 | 270°C | 16.0 | 1.4E-10 |
| Example 2 | $Li_3AlF_6$ | Wet | GBL | 20 | 0.5 | 50 | 24 | 270°C | 32.4 | 1.4E-10 |
| Example 3 | $Li_3AlF_6$ | Wet | GBL | 10 | 0.5 | 50 | 24 | 270°C | 37.6 | 1.3E-10 |
| Example 4 | $Li_3AlF_6$ | Wet | GBL | 10 | 0.5 | 50 | 48 | 270°C | 44.6 | 1.2E-10 |
| Reference Example 1 | $Li_3AlF_6$ | Dry | - | - | 5 | 25 | 12 | - | 3.1 | 8.3E-08 |
| Comparative Example 1 | LiF | - | - | - | - | - | - | - | - | Not measurable |

<Discussion>

Each of the solid electrolyte materials in Examples 1 to 4 has an ionic conductivity of greater than or equal to $1.2 \times 10^{-10}$ S/cm at room temperature and has a specific surface area of greater than or equal to 16 $m^2$/g. However, the specific surface area of the solid electrolyte material in Reference Example 1 produced using the dry ball mill was as small as 3.1 $m^2$/g.

Each of the batteries in Examples 1 to 4 could be well charged and discharged at 25°C.

As described above, the solid electrolyte material of the present disclosure has high lithium ion conductivity and is suitable for providing a battery that can be well charged and discharged.

The same results as those shown in the Examples may also be obtained using positive electrode active materials other than the NCA, particularly lithium-containing transition metal oxides. The solid electrolyte material having a large specific surface area enters the recessed portions on the surface of the active material, and the contact between the solid electrolyte material and the active material is thereby improved. This effect can be obtained irrespective of the chemical composition of the positive electrode active material. This effect is significant particularly when the particles of the positive electrode active material are secondary particles.

Industrial Applicability

The solid electrolyte material of the present disclosure is utilized, for example, for lithium ion secondary batteries.

Reference Signs List

| 100 | solid electrolyte |
| 101 | solid electrolyte material powder |
| 201 | positive electrode |
| 202 | electrolyte layer |
| 203 | negative electrode |
| 204 | positive electrode active material |
| 205 | negative electrode active material |
| 300 | compression molding die |
| 301 | upper punch |
| 302 | die |
| 303 | lower punch |
| 1000 | battery |

**Claims**

1. A solid electrolyte material comprising:

   Li; Al; and X,
   wherein X represents anions including F, and
   wherein the solid electrolyte material has a specific surface area of greater than or equal to 16 $m^2$/g.

2. The solid electrolyte material according to claim 1, wherein the solid electrolyte material includes a phase represented by compositional formula (1):

   $$Li_{6-3x}Al_xF_6 \qquad (1)$$

   wherein, $0 < x \leq 1.5$ is satisfied.

3. The solid electrolyte material according to claim 1, wherein a ratio of a molar amount of F to a total molar amount of the anions included in the solid electrolyte material is greater than or equal to 0.50 and less than or equal to 1.0.

4. The solid electrolyte material according to claim 1, wherein the solid electrolyte material includes $Li_3AlF_6$.

5. The solid electrolyte material according to claim 1, wherein the specific surface area is less than 100 $m^2$/g.

**6.** The solid electrolyte material according to claim 1, wherein the specific surface area is less than 60 $m^2/g$.

**7.** The solid electrolyte material according to claim 1, wherein the specific surface area is greater than or equal to 32.4 $m^2/g$.

**8.** A method for producing the solid electrolyte material according to claim 1, the method comprising a wet pulverization step of pulverizing a mixture containing a solvent and a raw material composition containing compositional components of the solid electrolyte material.

**9.** The method for producing the solid electrolyte material according to claim 8, wherein the solvent includes at least one selected from the group consisting of γ-butyrolactone, propylene carbonate, butyl acetate, ethanol, dimethyl sulfoxide, and tetralin.

**10.** A positive electrode material comprising: the solid electrolyte material according to any one of claims 1 to 7; and a positive electrode active material coated with the solid electrolyte material.

**11.** A battery comprising:

a positive electrode containing the positive electrode material according to claim 10; and an electrolyte layer.

**12.** The battery according to claim 11, wherein the battery is a solid-state battery.

**13.** The battery according to claim 11, wherein the electrolyte layer contains a solid electrolyte containing Li and S.

# FIG. 1

# FIG. 2

# FIG. 3

FIG. 4

## INTERNATIONAL SEARCH REPORT

International application No.

**PCT/JP2024/019515**

### A. CLASSIFICATION OF SUBJECT MATTER

*H01B 1/06*(2006.01)i; *H01M 4/36*(2006.01)i; *H01M 10/052*(2010.01)i; *H01M 10/0562*(2010.01)i
FI:  H01B1/06 A; H01M10/0562; H01M10/052; H01M4/36 C

According to International Patent Classification (IPC) or to both national classification and IPC

### B. FIELDS SEARCHED

Minimum documentation searched (classification system followed by classification symbols)

H01B1/06; H01M4/36; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2023-9668 A (SAMSUNG R&D INSTITUTE JAPAN CO., LTD.) 20 January 2023 (2023-01-20) <br> paragraphs [0032]-[0036], [0044] | 1-4, 7, 10-12 |
| Y | | 1-13 |
| Y | WO 2023/042560 A1 (PANASONIC INTELLECTUAL PROPERTY MANAGEMENT CO., LTD.) 23 March 2023 (2023-03-23) <br> paragraphs [0012], [0016], [0017], [0045]-[0054], [0071], [0089]-[0091], [0163] | 1-13 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 July 2024** | **06 August 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/019515**

| Patent document cited in search report | | | Publication date (day/month/year) | Patent family member(s) | | | Publication date (day/month/year) |
|---|---|---|---|---|---|---|---|
| JP | 2023-9668 | A | 20 January 2023 | US | 2023/0024868 | A1 | |
| | | | | paragraphs [0089]-[0102], [0128] | | | |
| WO | 2023/042560 | A1 | 23 March 2023 | CN | 117941012 | A | |

**EP 4 726 740 A1**

**Patent documents cited in the description**

- JP 2011129312 A
- JP 2012084547 A